# EUROPEAN PATENT APPLICATION

(11) **EP 4 789 963 A1**
(43) Date of publication of application: **12.08.2026**
(21) Application number: 25156992.7
(22) Date of filing: 11.02.2025
(51) Int. Cl.: B64C 1/06, B64C 1/18

(54) **SUPPORT STRUCTURE FOR A CABIN FLOOR IN AN AIRCRAFT**

(71) Applicant: AIRBUS Operations GmbH, 21129 Hamburg (DE)
(72) Inventor: Taube, Sören, 21129 Hamburg (DE); Benthien, Hermann, 21129 Hamburg (DE); Cornu, Clément, 21129 Hamburg (DE)
(74) Representative: LKGLOBAL Partnerschaftsgesellschaft mbB

(57) **Abstract**

In order to provide a facilitated floor sub-structure, a support frame (10) for an aircraft cabin floor is provided. The support frame is provided by frame members (12) comprising at least two primary frame members (14) and at least two secondary frame members (16). The primary frame members are configured to form vertical load support columns (18). The secondary frame members are configured to form horizontal bar frame members (20). The primary frame members are arranged parallel to each other, and the secondary frame members are arranged parallel to each other, while the primary frame members are arranged transverse to the secondary frame members. One of the secondary frame members is connected to one end of the respective primary frame members and another of the secondary frame members is connected to the other end of the respective primary frame members. The primary frame members and the secondary frame members are made by cutting and forming from a single sheet.

## Description

### FIELD OF THE INVENTION

The present invention relates to a support structure for a cabin floor in an aircraft, and relates in particular to a support frame for an aircraft cabin floor, to a support system for an aircraft cabin floor, to an aircraft and to a method for installation of a support for an aircraft cabin floor.

### BACKGROUND OF THE INVENTION

Aircrafts like commercial airplanes have a cabin area inside the fuselage that is separated from a cargo space by a cabin floor. The floor, spanning from side to side of the fuselage, may be hold by a structure below the floor that supports the floor and that transmits the forces, i.e. in particular load, into the fuselage structure. The floor construction may also be used to arrange supply lines in an area between support posts and the fuselage. As an example, EP 4160070 A1 describes supply lines attached to vertical support posts below the cabin floor. However, it has been shown that the assembly of the floor sub-structure and the supply lines can be tedious due to the limited available space.

### SUMMARY OF THE INVENTION

There may thus be a need to provide a facilitated floor sub-structure.

The object of the present invention is solved by the subject-matter of the independent claims; further embodiments are incorporated in the dependent claims. It should be noted that the following described aspects of the invention apply also for the support frame for an aircraft cabin floor, for the support system for an aircraft cabin floor, for the aircraft and for the method for installation of a support for an aircraft cabin floor.

According to the present invention, a support frame for an aircraft cabin floor is provided. The support frame is provided by frame members comprising at least two primary frame members and at least two secondary frame members. The primary frame members are configured to form vertical load support columns. The secondary frame members are configured to form horizontal bar frame members. The primary frame members are arranged parallel to each other, and the secondary frame members are arranged parallel to each other, while the primary frame members are arranged transverse to the secondary frame members. One of the secondary frame members is connected to one end of the respective primary frame members, and another of the secondary frame members is connected to the other end of the respective primary frame members. The primary frame members and the secondary frame members are made by cutting and forming from a single sheet.

As an effect, at least a part of the supporting sub-structure of the cabin floor is provided as prefabricated module. Thus, handling and assembly is facilitated.

According to an example, the primary frame members and the secondary frame members are integrally made.

As an advantage, precision is increased due to less joints. Also, tolerances are minimized which also supports the assembly procedure.

According to an example, the primary frame members and the secondary frame members are forming a frame plane.

As another result, the provision of a sealing, for example by panels enclosing the cargo area, is facilitated.

According to an example, lateral supply holding brackets are provided that are cantilevering from the primary frame members in a projection direction transverse to a direction of the secondary frame members; the lateral holding brackets are configured to support linear supply members. The lateral holding brackets are made by cutting and forming from the same single sheet, from which the primary frame members and the secondary frame members are made from.

As an advantage, the assembly is facilitated due to less steps. The holding brackets are provided by or in the same steps as the complete frame.

According to an example, the support frame comprises an equipment mount for receiving an electric distribution box attachable to the support frame; the equipment mount is provided in one half in an upper frame section. The support frame comprises an opening with an access panel mount for receiving an access panel attachable to the support frame; the access panel mount is provided in the other half in the upper frame section adjacent to the equipment mount such that the opening allows access to an electric distribution box mounted to the equipment mount.

This allows a space saving placement as well as easy access for further purposes.

In an option, the equipment mount is made by cutting and forming from the same single sheet, from which the primary frame members and the secondary frame members are made from.

As an advantage, providing the mount in a similar manner as the holding brackets, also reduces assembly steps and further also increases accuracy due to less tolerances.

According to an example, the primary and secondary frame members comprise connecting surfaces configured to provide attachment strips for attaching cargo area enclosing panels.

This allows a facilitated implementation of a sealing structure, for example to seal off the cargo area, against further space within the fuselage like the cabin compartment.

In an option, the attachment strips are made by cutting and forming from the same single sheet, from which the primary frame members and the secondary frame members are made from.

According to an example, the connecting surfaces are configured to provide continuous linear attachment strips for flat panels. The connecting surfaces are arranged in respective planes.

As an advantageous effect, panels can be provided with a simplified flat design.

According to the present invention, also a support system for an aircraft cabin floor is provided. The support system comprises a plurality of support frames according to one of the preceding examples. The support system also comprises a plurality of upper connectors and a plurality of lower connectors. The upper connectors are configured to connect the support frames to horizontal beams of a cabin floor construction. The lower connectors are configured to connect the support frames to structural members of a fuselage, the structural members comprising at least one of frames and stringers.

As an advantage, the connectors allow a facilitated assembly as they provide the same interface for the support frames, while they can be adapted to the respective further structure to which they are mounted.

According to an example of the support system, the upper connectors are a part of sliding holders for a linear horizontal placement of the support frames within the fuselage. In addition or alternatively, the lower connectors are a part of tolerance compensating holders for compensating vertical fuselage structure tolerances.

This allows an easier handling during the assembly steps. The weight can be carried by the aircraft's structure and special handling arrangements within the fuselage are not necessary.

According to an example, a plurality of lateral connectors is provided that are configured to laterally connect adjacent support frames to each other.

The lateral connectors allow to achieve a continuous support structure below the cabin floors.

In an option, the lateral connectors are provided for compensating horizontal fuselage structure tolerances.

As an advantage, tolerance compensation can be taken care of frame-wise.

According to the present invention, also an aircraft comprising a fuselage structure comprising a cabin area and a cargo area is provided. A cabin floor is provided within the fuselage structure separating the cabin area from the cargo area. The cabin floor is at least partly supported by a support system according to one of the examples above.

According to the present invention, also a method for installation of a support for an aircraft cabin floor is provided. The method comprises the following steps:
- Providing a cabin floor in a fuselage of an aircraft, the cabin floor comprising a plurality of horizontal beams on its underside;
- Providing a plurality of support frames according to one of the examples above;
- Attaching upper connectors to the support frames;
- Connecting the upper connectors to the horizontal beams such that the support frames are hanging from the horizontal beams;
- Moving the support frames along the underside of the cabin floor towards their target positions; and
- Mounting the support frames by fixing the upper connectors and by providing lower connectors and connecting the support frames to structural members of the fuselage comprising at least one of frames and stringers.

According to an aspect, a slidable press-formed framework is provided with integrated vertical struts and integrated system interfaces. A continuous circumferential sealant for panel attachment is also provided. A flexible interface with longitudinal sealing function is achieved. As an option, rotary interfaces based on a rotary glove principle are provided to create a sliding gap to the primary structure guidance. The rotary slider also creates a 3D tolerance compensation.

This also addresses the following aspects for system installation on a frame: The brackets and the attachment point enable the load transfer towards the primary structure. The brackets are attached to the primary structure by maximal two or another sufficient number of attachment points. The attachment points to the primary structure enable a tolerance compensation in X-direction by sufficient degree. The tolerance compensating elements are accessible after integration of the module. The design considers the electrical discharging and considers the electronic distribution boxes as part of the module. The design enables a customized pre-installation independent from the standard pre-assembly of the module. The bracket is built up of an optimized number of parts. The bracket "family" comprises a minimum number of manufacture index numbers (*Herstellerteilekennzeichen*, HTZ). The installation bracket-to-structure is possible with different standard tools (maximum number of tools). The installation system-to-bracket is possible with different standard tools (maximum number of tools). The design enables automatization for pre-assembly and integration, e.g. by identification, transportation, inspection and/or positioning.

The present invention provides several advantages. A highly standardized repeatable accuracy is achieved through press-formed and laser-cutting inside the frames. This results in low tolerance compensation for the panel attachments. A gas tight interface between the frames including tolerance compensation through weak interfaces is also provided. Further, sliding interfaces, e.g. by the upper connectors, allow a fast installation and a stress-free tolerance compensation. The integration of closing angles between the frames allows an adjustment of tolerances through a one shot press-formed part without any split lines.

The basic concept provides segments with defined datum points which means that these points are valid for all involved partners, i.e. components.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a support frame for an aircraft cabin floor.
Fig. 2 shows an example of a support system for an aircraft cabin floor.
Fig. 3 shows an example of an aircraft.
Fig. 4 shows basic steps of an example of a method for installation of a support for an aircraft cabin floor.
Fig. 5.1 shows a lateral view of an example of a support frame.
Fig. 5.2 shows a top view of the support frame of Fig. 5.1.
Fig. 5.3 shows a lateral side view of the support frame of Fig. 5.1.
Fig. 6.1 shows another example of a support frame in a lateral view and a lateral side view in the left portion.
Fig. 6.2 shows an example of equipment to be installed in the support frame of Fig. 6.1.
Fig. 6.3 shows the support frame of Fig. 6.1 with the installed equipment of Fig. 6.2 in a lateral view and a lateral side view in the left portion.
Fig. 7 shows a lateral side view of an example of the support system installed in an aircraft with mounted supply lines.
Fig. 8 shows the example of Fig. 7 with mounted panels of a cargo area enclosure.
Fig. 9 shows a lateral view of the support system of Fig. 7.
Fig. 10 shows a lateral view of the support system of Fig. 8.
Fig. 11 shows an example of a detail of an edge of a support frame.
Fig. 12 shows a first example of a connector for adjacent support frames.
Fig. 13 shows a second example of a connector for adjacent support frames.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

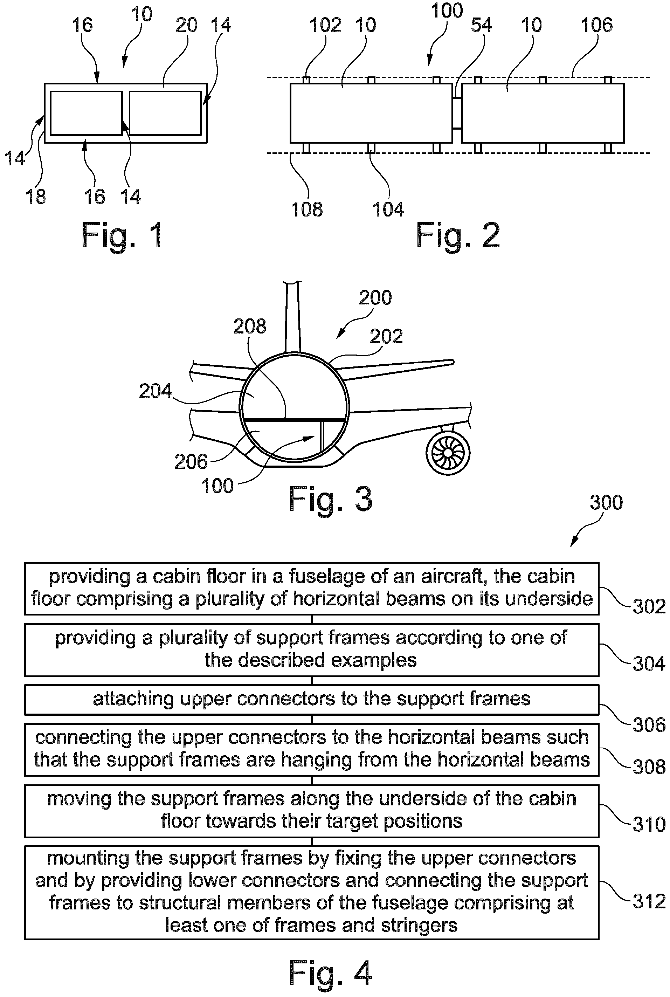

Fig. 1 schematically shows an example of a support frame 10 for an aircraft cabin floor. The support frame 10 is provided by frame members 12 comprising at least two primary frame members 14 and at least two secondary frame members 16. The primary frame members 14 are configured to form vertical load support columns 18. The secondary frame members 16 are configured to form horizontal bar frame members 20. The primary frame members 14 are arranged parallel to each other, and the secondary frame members 16 are arranged parallel to each other, while the primary frame members 14 are arranged transverse to the secondary frame members 16. One of the secondary frame members 16 is connected to one end of the respective primary frame members 14 and another of the secondary frame members 16 is connected to the other end of the respective primary frame members 14. The primary frame members 14 and the secondary frame members 16 are made by cutting and forming from a single sheet.

The term "support frame" refers to a support structure for supporting the aircraft cabin floor. The support frames 10 are provided to be arranged below the cabin floor to transfer in particular vertical loads that are acting on the cabin floor to the fuselage. In this respect, the support frames 10 thus provide a similar function as support columns below the cabin floor. However, the support frames 10 are provided as frame-structures, and not individual columns. The support frames 10 combine vertical load transfer and horizontal connectors, i.e. vertical support with connecting the different structural members to achieve a facilitated handling in particular for installation purposes. Besides the vertical support function, the support frames 10 also provide a circumferential structure that facilitates attaching panels for enclosing the cargo space or cargo area on board the aircraft. The frame-like combination of vertical and horizontal structural elements in form of the primary and secondary frame members 14, 16 provides flat and easily accessible connecting portions for attaching e.g. panels.

The term "aircraft cabin floor" refers to the horizontal plane in a commercial aircraft separating a lower cargo area from the cabin area provided in particular for passenger seating. The aircraft cabin floor refers to the horizontal beam structure extending from side to side within the fuselage and the further sub-constructions like support grids, floor panels and seat rails or other rails.

The term "primary frame member" refers to those parts of the frame that are providing the vertical support function, comparable to columns. The primary frame members 14 run essentially vertical when installed. The term essentially vertical means exactly 90° to a horizontal plane, or a deviation from vertical by +/- 5° or by +/- 10° or by even up to by +/- 15°. The primary frame members 14 can also provide other support functions like attaching or mounting of holding brackets or mounting of panels.

In an example, the at least two primary frame members 14 are provided as a first and a second primary frame member forming a first and a second lateral support edge of the support frame. In another example, the at least two primary frame members 14 are provided as more than two primary frame members 14, for example as three, four, five or more primary frame members 14. In case of three or more primary frame members 14, the first and the last of the primary frame members 14 form the lateral edges of the support frame, while the others form field supports of the support frame.

The primary frame member 14 can also be referred to as primary load support frame member, vertical frame member, vertical support member, vertical support column, column member, column, post, strut, stand, stanchion or support.

The term "vertical load support column" refers to the load transfer from the floor plane to the fuselage structure.

The term "secondary frame member" refers to those parts of the frame that are providing the horizontal support functions, comparable to beams or bars. The secondary frame members 16 run essentially horizontally when installed. The secondary frame members 16 can also provide other support functions like attaching or mounting of panels or mounting of holding brackets.

In an example, the at least two secondary frame members 16 are provided as a first and a second secondary frame member forming an upper and a lower edge of the support frame. In another example, the at least two secondary frame members are provided as more than two secondary frame members, for example as three, four, five or more secondary frame members.

The secondary frame member 16 can also be referred to as: secondary load support frame member, horizontal frame member, horizontal support member, horizontal support bar, bar member, bar, beam, transom, crossbar, crossmember, cross rail, cross girder, traverse or joist.

The term "horizontal bar frame members" refers to the connection of the vertical parts with the bar-type of frame members.

The term "parallel" refers to an essentially aligned arrangement. In an example, an alignment with an inclination of up to 15° is provided as parallel. In another example, an alignment with an inclination of up to 10° is provided. In a further example, an alignment with an inclination of up to 5° is provided as parallel.

The term "connected" refers to physical connection in terms of load transfer and fixation to each other.

In an example, the term "connected" is achieved by providing the primary and secondary frame members 14, 16 as one-piece structure, like being made from a single sheet of material like metal or a reinforced matrix material.

The term "cutting and forming" refers to the manufacturing process: The start is a sheet of material, which is cut to form the parts needed for the support frame members and which is then formed to achieve the desired three-dimensional shape of the members. In an example, the cutting is provided first and then the forming. In another option, cutting and forming is provided at the same time, e.g. by pressing steps. In another option, cutting and forming are provided as several steps in an interwoven manner. Cutting can be provided by laser-cutting, plasma cutting or other form of high precision cutting.

As an example, the forming comprises one or several bending, compression or stretching steps.

In an example, the material of the support frame 10 can be any form of metal used in aircrafts.

In another example, the material of the support frame 10 comprises non-metal material.

As an example, thermoplastic carbon-fiber reinforced plastic material is used.

In a further example, a combination of metal and fiber reinforced matrix materials is used.

In Fig. 1, a middle primary frame member 14 is shown as an option.

In an option of the example of Fig. 1, the primary frame members 14 and the secondary frame members 16 are integrally made.

The term "integrally made" refers to made as a single piece with a continuous flow of material. In an example, the integrally support frame is made from the same single sheet of material. The support frame is thus provided as an integral frame.

The integral frame provides the basis for the system members arranged behind the integral frame in the triangular shaped space of the fuselage below the cabin floor.

In an example, the primary frame members 14 and the secondary frame members 16 are made as one-piece.

In an option of the example of Fig. 1, the primary frame members 14 and the secondary frame members 16 are forming a frame plane.

In an example, the term "frame plane" refers to more or less flat arrangement of the support frame providing an even plane for further attachment of panel structures. Of course, a certain thickness is provided to ensure structural stability and increased load transfer.

In another example, the term "frame plane" refers to a curved frame plane. For example, the plane can be mono-convex, or curved in one direction. For example, the plane can also be bi-convex or curved in two directions. The curved arrangement of the support frame provides a curvilinear or domed plane for further attachment of flat or curved panel structures. Of course, a certain thickness is provided to ensure structural stability and increased load transfer.

Fig. 2 shows an example of a support system 100 for an aircraft cabin floor. The support system 100 comprises a plurality of the support frames 10 according to one of the preceding examples. The support system 100 also comprises a plurality of upper connectors 102 and a plurality of lower connectors 104. The upper connectors 102 are configured to connect the support frames 10 to horizontal beams of a cabin floor construction. The lower connectors 104 are configured to connect the support frames 10 to structural members of a fuselage, the structural members comprising at least one of frames and stringers.

A first broken line 106 indicates an upper support structure and a second broken line 108 indicates a lower support structure.

The term "support system" refers to the plurality of support frames 10 and the attachments for mounting of the support frames 10.

The term "upper connector" refers to holding parts for attaching the frames 10 at their upper edges (when installed) to the underside, i.e. the lower, downwards facing side of the cabin floor.

The term "lower connector" refers to holding parts for attaching the frames 10 at their lower edges (when installed) to the fuselage structure.

The term "horizontal beams" refers to the structural members of the cabin floor spanning across the fuselage, i.e. from side to side.

The term "structural members" refers to the load carrying members arranged for forming the fuselage. The structural members are frames and stringers. In addition, also other grid-like members can be provided.

In an example, the upper connectors 102 are providing a minimal length load path in relation to the fixed alignment points provided e.g. by the seat rails.

In an example, the upper connectors 102 are mounted to a support structure in short distance to a Datum-line, like a seat rail. The support frame can thus be mounted in a position with high alignment to its target position. Since the support frame is prefabricated and made from a single sheet of for example metal, a high precision of the support frame's size, shape, form and contour is achieved.

Fig. 3 shows an example of an aircraft 200 comprising a fuselage structure 202 comprising a cabin area 204 and a cargo area 206. A cabin floor 208 is provided within the fuselage structure 202 separating the cabin area from the cargo area. The cabin floor 208 is at least partly supported by an example of the support system 100 according to one of the examples above and below.

Fig. 4 shows basic steps of an example of a method 300 for installation of a support for an aircraft cabin floor. The method 300 comprises the following steps:
- Providing 302 a cabin floor in a fuselage of an aircraft, the cabin floor comprising a plurality of horizontal beams on its underside;
- Providing 304 a plurality of the support frames according to one of the examples above and below;
- Attaching 306 upper connectors to the support frames;
- Connecting 308 the upper connectors to the horizontal beams such that the support frames are hanging from the horizontal beams;
- Moving 310 the support frames along the underside of the cabin floor towards their target positions; and
- Mounting 312 the support frames by fixing the upper connectors and by providing lower connectors and connecting the support frames to structural members of the fuselage comprising at least one of frames and stringers.

In an example of the method 300, the support frames are sliding in a hanging manner across an upper rail holder that is provided at the underside of the floor construction.

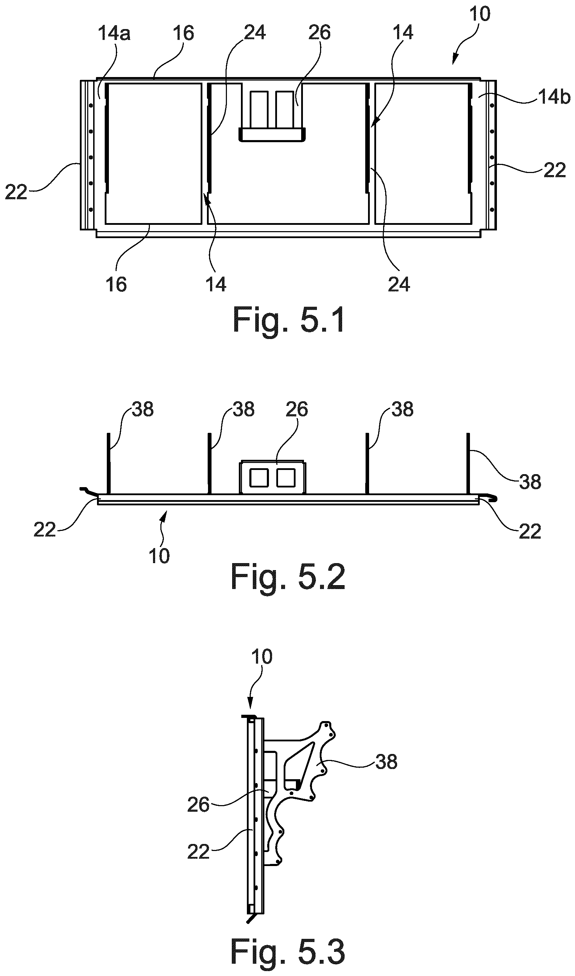

Fig. 5.1 shows a lateral view of an example of the support frame 10. As an option, a plurality of three or more of the primary frame members 14, 14a, 14b, 14c is provided. The first 14a and the last 14b of the plurality of the primary frame members 14 form lateral edge supports 22 of the support frame 10, while the at least one other primary frame member 14c forms a field support 24 of the support frame 10.

The term "lateral edge support" refers to support elements like columns at the outer side edges.

The term "field support" refers to support elements like columns within the field defined by the support frame. The field support frames are the primary frame members that are not arranged on the lateral edge portions. The field support frames are the primary frame members between the lateral edge supports.

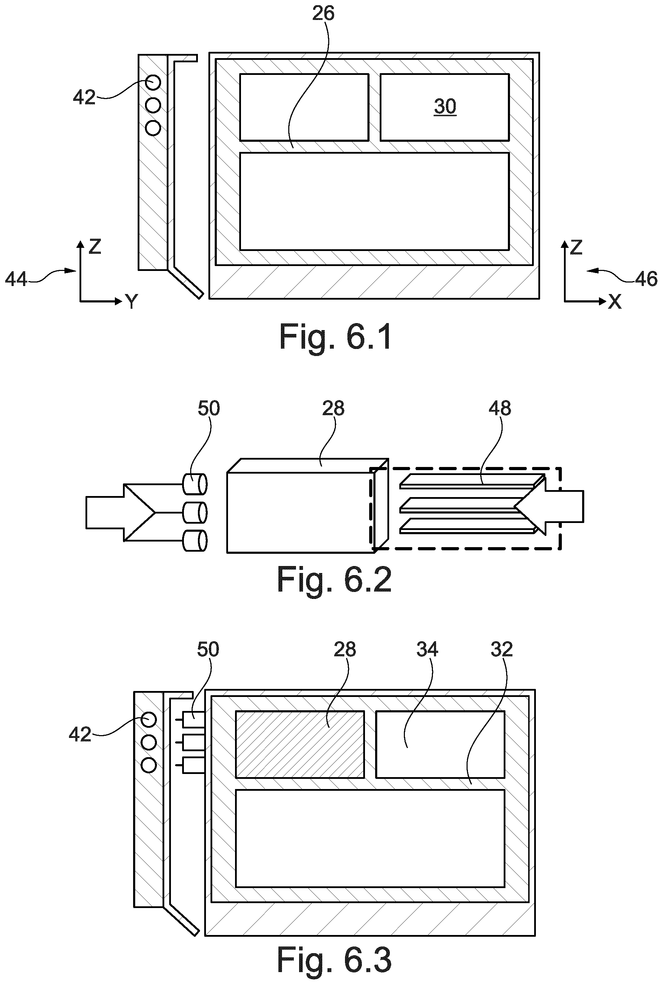

As an option, the support frame 10 comprises an equipment mount 26 for receiving an electric distribution box 28 (see Fig. 6.2 and Fig. 6.3) attachable to the support frame 10. The equipment mount 26 is provided in one half in an upper frame section. The support frame 10 also comprises an opening 30 with an access panel mount 32 for receiving an access panel 34 attachable to the support frame 10. The access panel mount 32 is provided in the other half in the upper frame section adjacent to the equipment mount 26 such that the opening allows access to an electric distribution box 36 mounted to the equipment mount 26.

As an option, the equipment mount 26 is made by cutting and forming from the same single sheet, from which the primary frame members 14 and the secondary frame members 16 are made from.

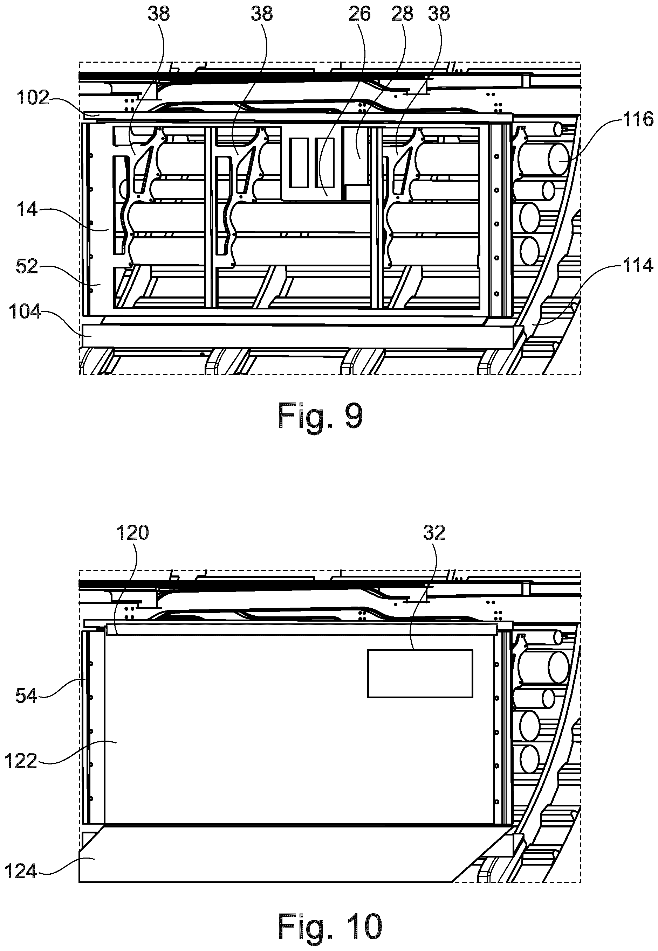

Fig. 5.1 shows the equipment mount 26 so-to-speak hanging from an upper beam of the support frame 10. The access panel 34 will be described in relation with Fig. 9 and Fig. 10.

Fig. 5.2 shows a top view of the support frame 10 of Fig. 5.1 with the equipment mount 26 projecting from the frame members upwards in the drawing.

Fig. 5.3 shows a lateral side view of the support frame 10 of Fig. 5.1 with the equipment mount 26 projecting to the right in the drawing.

The term "equipment mount" refers to holding and fixation means like brackets, consoles, flanges and the like for attaching equipment. In an example, the equipment is provided as flight related electronics, sensors or actuators. In another example, the equipment relates to operating the aircraft in terms of passenger service functions like lavatory and gally. In a further example, the equipment is provided as on-board entertainment devices.

The term "electric distribution box" refers to a structure, e.g. having a housing, provided for distribution of electric lines and cables, e.g. for passenger seat supply.

The term "access panel mount" refers to a holding and fixation means for releasably attaching the access panel 34 in order to provide a service opening to reach out to e.g. the electric distribution box 28.

For example, the access via the opening (with a detached access panel) allows connecting the electric distribution box 28 to cables or other harnesses. For example, the access allows inserting and replacing cartridges with circuit boards or other boards with attached electronic equipment.

In an example, the primary frame members 14 are provided with cutouts for passing through of harness members.

In an example, when installed, the equipment is positioned in an optimized position for maintenance. Further, the electric distribution boxes 28 are arranged in an optimized position regarding the attachment to the passenger seats arranged above the floor supported by the support frames.

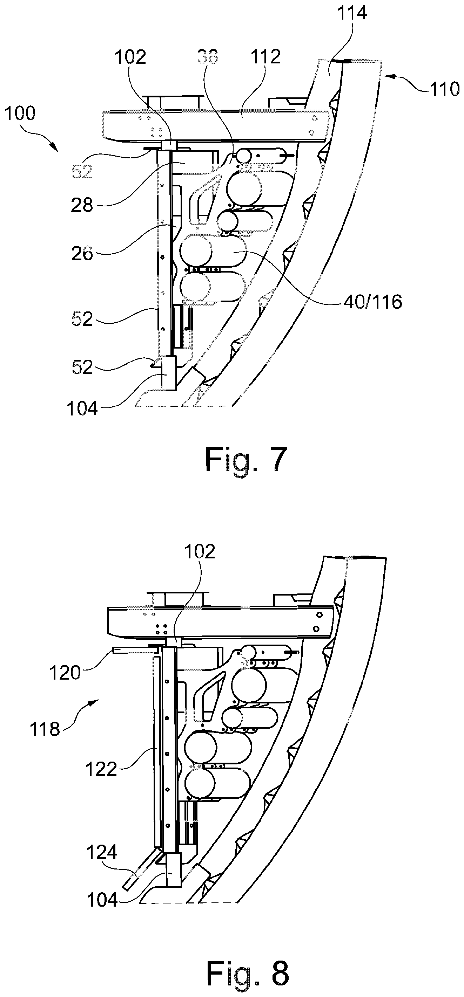

According to an example, shown as an option in Fig. 5.1 ff., lateral supply holding brackets 38 are provided that are cantilevering from the primary frame members 14 in a projection direction transverse to a direction of the secondary frame members 16; the lateral holding brackets 38 are configured to support linear supply members 40 (see Fig. 7).

In an option, the lateral holding brackets 38 are made by cutting and forming from the same single sheet, from which the primary frame members 14 and the secondary frame members 16 are made from.

Fig. 5.2 shows a top view of the support frame 10 of Fig. 5.1 with the supply holding brackets 38 projecting upwards in the drawing.

Fig. 5.3 shows a lateral side view of the support frame 10 of Fig. 5.1 with the supply holding brackets 38 projecting to the right in the drawing.

The term "supply holding bracket" refers to holders or mounts for attaching further equipment and transferring their loads into the vertically arranged parts of the support frame and into the fuselage structure. The holders are provided to hold equipment and installation that supply the aircraft and the passengers.

The term "linear supply member" refers to supply lines extending along the length of the aircraft. As an example, the supply lines are arranged in an aera behind the vertical supports, i.e. between the fuselage and the supply frames. In an example, the linear supply members are provided as horizontally running supply members. For example, the supply members are cables, pipes, ducts or conduits. As an example, the supply members are provided for conducting fluids like gases or liquids, data signals, electricity or for transmitting forces.

In an example, the supply holding bracket 38 is provided as a common holding structure projecting from the respective primary frame member, the common holding structure providing several receiving portions for attaching linear supply members.

In another example, the supply holding bracket 38 is provided as a plurality of holding arms projecting frame the respective primary frame member, the holding arms providing the several receiving portions for attaching linear supply members.

The supply holding brackets 38 are projecting on one side of the frame plane from the frame plane transverse to the frame plane.

In an example, supply holding brackets 38 are provided at the lateral edge supports.

In an example, supply holding brackets 38 are provided for each of the primary frame members.

In an example, linear supply members are fixed to the supply holding brackets 38, forming a preinstalled support frame that can be brought into the cargo area of the fuselage below a cabin floor for mounting to the cabin floor and the fuselage. In an example, the linear supply members are provided with self-centering connectors.

In another example, electric distribution boxes 28 are fixed to the support frame, forming a preinstalled support frame that can be brought into the cargo area of the fuselage below a cabin floor for mounting to the cabin floor and the fuselage.

According to an aspect, the support frame provides a module.

In an example, the module has a standard hole pattern for snap & click system attachments on the lateral sides.

In an example, the module comprises defined fix points, defined floating points and defined compensation gaps and mechanism.

In an example, the module extends over several frame intervals of the fuselage. For example, the support frame has a length of over 5 meters or even up to 10 meters. The support frames so-to-speak break the tolerance chain if each frame is aligned for itself and compensation is provided between the frames. Floating is provided to both lateral sides towards the connection zones with the adjacent frames.

As an option, the electrical distribution box 28 is accessible within 15 minutes.

The bracket holds one or several systems in place. The system attachment fittings withstand high temperatures. The bracket is fixed on the structure with tolerance compensation. The bracket is resistant to static loads. The bracket can also be resistant to dynamic loads. The system bracket operates under normal conditions. The bracket design is able to host bundles. Further, it is possible to de-install the bracket after the installation of the module.

In an option, the support frames 10 are covered with panels of a cargo space lining.

The support frames 10 provide a sidewall in the cargo area. The sidewall provides an integration layer for support/load-transfer functions and system functions.

In an option, the lateral supply holding brackets 38 are provided at each of the primary frame members 14.

Fig. 6.1 shows another example of the support frame 10 in a lateral view and a lateral side view in the left portion. The support frame 10 provides the option of the equipment mount 26. For connecting an installed example of the electric distribution box 28, openings 42 are arranged in the primary frame members 14. This is shown in the left portion, where a first reference system 44 is indicated with a vertical Z-axis (referring the axes commonly used in aircraft). A horizontal Y-axis indicates an axis transverse to a longitudinal X-axis of an aircraft. A second reference system 46 is indicated with the vertical Z-axis and an X-axis running aligned with the longitudinal X-axis.

Fig. 6.2 shows an example of equipment to be installed in the support frame of Fig. 6.1, for example the electric distribution box 28. Access must be given on one side to allow insertion and replacement of cartridges 48. Further access must be given on another side to allow connection of wiring 50.

Fig. 6.3 shows the support frame of Fig. 6.1 with the installed equipment in form of the electric distribution box 28 of Fig. 6.2 in a lateral view and a lateral side view in the left portion.

Fig. 7 shows a lateral side view of an example of the support system 100 installed in an aircraft fuselage 110. A cabin floor structure 112 is indicated connected to frames 114 of the fuselage 110. The lateral side view is shown as a perspective view.

The support frames 10 are connected at their upper edges to the cabin floor structure 112 by the upper connectors 102. The support frames 10 are further connected at their lower edges to the frames 114 of the fuselage 110 by the lower connectors 104.

Supply lines 116 are connected to the supply holding brackets 38. The supply lines 116 are indicated to be of various types.

As an option, the primary and secondary frame members 14, 16 comprise connecting surfaces configured to provide attachment strips 52 for attaching cargo area enclosing panels.

As an option, the attachment strips 52 are made by cutting and forming from the same single sheet, from which the primary frame members 14 and the secondary frame members 16 are made from.

The term "connecting surface" refers to parts of the frame that are facing e.g. towards the cargo bay area. The connecting surfaces are used for connecting the panels as an enclosure. The connecting surfaces thus provide the essentially continuous edge for attaching the panels.

The term "attachment strip" refers to the rather small in width but rather large in length dimension of the connecting surface and the purpose of attaching the panels. The attachment strip may comprise a sealing along its surface. The attachment strip can also comprise wholes, recesses, openings or other structural members for receiving connectors. The attachment strip can also provide an attachment surface for an adhesive, bond or glue or the like.

In an example, the primary frame members 14 comprise primary connecting surfaces.

In an example, the secondary frame members 16 comprise secondary connecting surfaces.

In an example, the connecting surfaces are provided as lateral flanges projecting from the primary and secondary frame members.

As an option, the connecting surfaces are configured to provide continuous linear attachment strips for flat panels. The connecting surfaces are arranged in respective planes.

The term "continuous" refers to an essentially non-interrupted strip for a sealing connection of the panels which preferably have a strip arranged in an even plane.

The term "linear attachment strips" refers to a surface area for attaching of panels or other enclosure members, which surface area is running along the edges like a line.

The term "flat panels" refers to panels formed in a flat geometric plane.

As an example, the cargo area enclosing panels are provided as flat panels. The flat panels thus define panel planes.

The connecting surfaces are provided to mount vertical or inclined or horizontal cargo area enclosing panels. In an example, the cargo area enclosing panels are providing a sealed enclosure of the cargo area, e.g. sealed in an airtight and/or liquid-tight manner.

As an option, the upper connectors 102 are a part of sliding holders for a linear horizontal placement of the support frames within the fuselage.

As another option, in addition or alternatively, the lower connectors 104 are a part of tolerance compensating holders for compensating vertical fuselage structure tolerances.

The term "sliding holder" refers to a mount that also allows a sliding movement in e.g. a non-fixed state. The sliding holder can then be fixed when the support frame has reached its final state, i.e. target position.

The term "tolerance compensating holder" refers to a holder that is able to compensate tolerances when fixing the support frame to the fuselage structure.

In an example, one of the secondary frame members forms an upper edge profile of the respective support frame and another one of the secondary frame members forms a lower edge profile of the respective support frame; the upper connectors are mounted to the upper edge profile and the lower connectors are mounted to the lower edge profile

In an example, the lower connectors 104 are provided as a rotary interface that allows distance length compensation and angular compensation.

The sliding holders allow the use of the existing structure for the installation. A jig is no longer necessary.

As an option, a plurality of lateral connectors 54 is provided that are configured to laterally connect adjacent support frames to each other.

As an option, the lateral connectors are provided for compensating horizontal fuselage structure tolerances.

The term "lateral connector" refers to connecting the support frames on their sides when installed. For example, the lateral connectors provide the connection with the adjacent support frame. The lateral connectors can be provided to ensure tightness, i.e. the lateral connectors may also provide the role of a panel of a cargo area lining.

The lateral connectors provide gap management with each support frame being aligned with a fixed reference like a so-called Datum point or Datum line.

Tolerances may occur due to thermal shrinking, fuselage deformations, cabin deformations or system elongation. In a cargo area, lining has to provide airtightness. Hence, gap management by the connecting zones of the frames provide respective measures to ensure air tightness.

In an option, of the support system 100, a plurality of cargo area enclosing panels is provided, comprising at least one of the group of: ceiling panels, vertical sidewall panels, sloping sidewall panels, floor panels and decompression panels.

Fig. 8 shows the example of Fig. 7 with mounted panels 118 of a cargo area enclosure. A first panel 120 is provided as an upper enclosing panel, a second panel 122 is a lateral or side enclosing panel and a third panel 124 is a lower enclosing panel. The third panel 124 is part of the floor panels of the cargo area.

Fig. 9 shows a lateral view of the support system of Fig. 7. The frame-like vertical support can be assembled outside the fuselage to have the supply lines attached when being moved in place. After mounting and connecting the supply line segments, the panels can be attached via the attachment strips 52.

Fig. 10 shows a lateral view of the support system of Fig. 8 with mounted cargo area enclosure panels.

As a still further option, for a lateral connection of the support frames, outer edges of the primary frame members are provided with edge profiles 56 comprising connection segments that are facing each other in an aligned inclined manner.

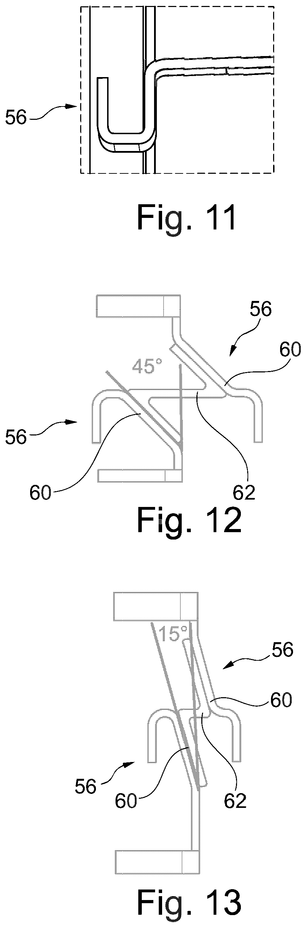

Fig. 11 shows an example of a detail of an edge of a support frame.

In an example, shown in variations in Fig. 12 and Fig. 13, the lateral connectors comprise two mounting surface segments 60 for attachment to the connection segments and a center web segment 62 connecting the two mounting surface segments in an inclined Z-wise manner matching to the aligned inclined manner of the connection segments that are facing each other.

The term "lateral connection" refers to the attachment of adjacent frames on their sides facing to each other. The lateral connection is provided in addition to the upper and lower connection of the support frames.

The term "edge profile" refers to the contour and form of the sidewards facing portion forming the lateral edge.

The term "connecting segment" refers to parts that are running e.g. in a vertical direction and that are provided for connection of the two adjacent support frames.

The term "mounting surface segment" refers to a part that is shaped for matching with the connecting segment.

The term "center web segment" refers to a portion that connects the two portions forming the mounting surface segments.

In an example, the connection segments are provided with an inclination angle in relation to a plane defined by the support frames. In an option, the inclination angle is approximately 45°. In another option, the inclination angle is approximately 15°.

In an example, a sealing is provided between the center web segment and the two mounting surface segments.

It has to be noted that embodiments of the invention are described with reference to different subject matters. In particular, some embodiments are described with reference to method type claims whereas other embodiments are described with reference to the device type claims. However, a person skilled in the art will gather from the description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A support frame (10) for an aircraft cabin floor, wherein the support frame is provided by frame members (12) comprising:
- at least two primary frame members (14); and
- at least two secondary frame members (16);
wherein the primary frame members are configured to form vertical load support columns (18);
wherein the secondary frame members are configured to form horizontal bar frame members (20);
wherein the primary frame members are arranged parallel to each other, and the secondary frame members are arranged parallel to each other, while the primary frame members are arranged transverse to the secondary frame members;
wherein one of the secondary frame members is connected to one end of the respective primary frame members and another of the secondary frame members is connected to the other end of the respective primary frame members; and
wherein the primary frame members and the secondary frame members are made by cutting and forming from a single sheet.

2. Support frame according to claim 1, wherein the primary frame members and the secondary frame members are integrally made.

3. Support frame according to claim 1 or 2, wherein the primary frame members and the secondary frame members are forming a frame plane.

4. Support frame according to claim 1, 2 or 3, wherein lateral supply holding brackets (38) are provided that are cantilevering from the primary frame members in a projection direction transverse to a direction of the secondary frame members; wherein the lateral holding brackets are configured to support linear supply members (40); and
wherein the lateral holding brackets are made by cutting and forming from the same single sheet, from which the primary frame members and the secondary frame members are made from.

5. Support frame according to one of the preceding claims, wherein the support frame comprises an equipment mount (26) for receiving an electric distribution box (28) attachable to the support frame; wherein the equipment mount is provided in one half in an upper frame section;
wherein the support frame comprises an opening (30) with an access panel mount (32) for receiving an access panel (34) attachable to the support frame; wherein the access panel mount is provided in the other half in the upper frame section adjacent to the equipment mount such that the opening allows access to an electric distribution box mounted to the equipment mount; and
wherein the equipment mount is made by cutting and forming from the same single sheet, from which the primary frame members and the secondary frame members are made from.

6. Support frame according to one of the preceding claims, wherein the primary and secondary frame members comprise connecting surfaces configured to provide attachment strips (52) for attaching cargo area enclosing panels; and
wherein the attachment strips are made by cutting and forming from the same single sheet, from which the primary frame members and the secondary frame members are made from.

7. Support frame according to claim 6, wherein the connecting surfaces are configured to provide continuous linear attachment strips for flat panels; and
wherein the connecting surfaces are arranged in respective planes.

8. Support frame according to one of the preceding claims, wherein a plurality of three or more primary frame members is provided; and
wherein the first and the last of the plurality of the primary frame members form the lateral edge supports (22) of the support frame, while the at least one other primary frame member forms a field support (24) of the support frame.

9. A support system (100) for an aircraft cabin floor, the support system comprising:
- a plurality of support frames (10) according to one of the preceding claims;
- a plurality of upper connectors (102); and
- a plurality of lower connectors (104);
wherein the upper connectors are configured to connect the support frames to horizontal beams of a cabin floor construction; and
wherein the lower connectors are configured to connect the support frames to structural members of a fuselage, the structural members comprising at least one of frames and stringers.

10. Support system according to claim 9, wherein the upper connectors are a part of sliding holders for a linear horizontal placement of the support frames within the fuselage; and/or
wherein the lower connectors are a part of tolerance compensating holders for compensating vertical fuselage structure tolerances.

11. Support system according to claim 9 or 10, wherein a plurality of lateral connectors (54) is provided that are configured to laterally connect adjacent support frames to each other; and
wherein the lateral connectors are provided for compensating horizontal fuselage structure tolerances.

12. Support system according to one of claims 9 to 11, wherein, for a lateral connection of the support frames, outer edges of the primary frame members are provided with edge profiles (56) comprising connection segments that are facing each other in an aligned inclined manner; and
wherein the lateral connectors comprise two mounting surface segments (60) for attachment to the connection segments and a center web segment (62) connecting the two mounting surface segments in an inclined Z-wise manner matching to the aligned inclined manner of the connection segments that are facing each other.

13. Support system according to one of claims 9 to 12, wherein a plurality of cargo area enclosing panels is provided, comprising at least one of the group of: ceiling panels, vertical sidewall panels, sloping sidewall panels, floor panels and decompression panels.

14. An aircraft (200) comprising a fuselage structure comprising a cabin area and a cargo area;
wherein a cabin floor (202) is provided within the fuselage structure separating the cabin area from the cargo area; and
wherein the cabin floor is at least partly supported by a support system (100) according to one of claims 9 to 13.

15. A method (300) for installation of a support for an aircraft cabin floor, comprising the following steps:
- providing (302) a cabin floor in a fuselage of an aircraft, the cabin floor comprising a plurality of horizontal beams on its underside;
- providing (304) a plurality of support frames (10) according to one of the claims 1-8;
- attaching (306) upper connectors to the support frames;
- connecting (308) the upper connectors to the horizontal beams such that the support frames are hanging from the horizontal beams;
- moving (310) the support frames along the underside of the cabin floor towards their target positions; and
- mounting (312) the support frames by fixing the upper connectors and by providing lower connectors and connecting the support frames to structural members of the fuselage comprising at least one of frames and stringers.
